# EUROPEAN PATENT APPLICATION

(11) **EP 3 866 058 A1**
(43) Date of publication of application: **18.08.2021**
(21) Application number: 21154004.2
(22) Date of filing: 28.01.2021
(51) Int. Cl.: G06K 9/00, B60W 30/09, B60W 30/095, B60W 60/00, G05D 1/00

(54) **TRAVEL ROUTE GENERATION SYSTEM, VEHICLE DRIVING ASSISTANCE SYSTEM, METHOD OF GENERATING A TRAVEL ROUTE FOR A VEHICLE AND COMPUTER PROGRAM PRODUCT**

(30) Priority: 13.02.2020 JP 2020022368
(71) Applicant: MAZDA MOTOR CORPORATION, Hiroshima 730-8670 (JP)
(72) Inventor: SUGANO, TAKASHI, Aki-gun, Hiroshima 730-8670 (JP)
(74) Representative: Müller-Boré & Partner Patentanwälte PartG mbB

(57) **Abstract**

[Task] To be able to appropriately reduce a calculation load for generating a target travel route while securing safety during driving assistance based on the target travel route.

[Solution] A vehicle driving assistance system 100 including a travel route generation system has an ECU 10 that acquires travel road information and obstacle information acquired by a camera 21, a radar 22, and the like and generates the target travel route, on which the vehicle 1 travels, on a travel road. The ECU 10 generates a guide line on the basis of the travel road information, generates an avoidance line on the basis of the obstacle information, and generates the target travel route on the basis of the guide line and the avoidance line. The guide line is a reference travel line for guiding a vehicle on the travel road. The avoidance line is a travel line for the vehicle to avoid an obstacle. Then, the ECU 10 sets a first calculation cycle for generating the guide line to be longer than a second calculation cycle for generating the avoidance line.

## Description

### [Technical Field]

The present invention relates to a travel route generation system that generates a travel route of a vehicle and a vehicle driving assistance system that assists with driving of the vehicle on the basis of the travel route. Further, the invention relates to a method of generating a travel route for a vehicle and to a computer program product.

### [Background Art]

Conventionally, a technique of setting a target travel route on which a host vehicle travels on the basis of a surrounding situation of the host vehicle and a state of the host vehicle and assisting with driving of the vehicle on the basis of this target travel route (more specifically, driving assist control and automated driving control) has been developed. For example, in Patent document 1, a technique of setting a start point and an end point of a lane change on the basis of information on the host vehicle, information on another vehicle around the host vehicle, and the like and generating the target travel route according to these points at the time of the lane change is disclosed.

### [Prior Art Documents]

### [Patent documents]

[Patent document 1] JP-A-2017-100657

### [Summary of the Invention]

### [Problem to be solved by the invention]

By the way, when the vehicle driving assistance is executed on the basis of the target travel route, a calculation load for generating the target travel route tends to be increased in a situation where plural types of control (control in which steering and acceleration/deceleration are performed for plural times, and the like) are necessary in such driving assistance, for example, in a situation where the vehicle turns to the right or the left at an intersection after changing the lane. Meanwhile, in the case where an obstacle exists on a travel road of the vehicle, it is necessary to generate such a target travel route that avoids the obstacle in order to prevent a collision of the vehicle with the obstacle and secure safety. In such a case, in a situation where such a route that requires complicated control in the driving assistance as described above is applied, when the obstacle exists on the route, for example, when the vehicle turns to the right or the left at the intersection after changing the lane while avoiding the vehicle therearound, the calculation load for generating the target travel route is significantly increased.

In Patent document 1 described above, the description is only made that the target travel route is generated at the time of the lane change, and the problem on which the inventor of the present application has focused is not disclosed at all. Naturally, a technique capable of solving this problem is neither disclosed nor suggested.

The present invention has been made to solve the above-described problem and therefore has a purpose of providing a travel route generation system and a vehicle driving assistance system, the travel route generation system capable of appropriately reducing a calculation load for generating a target travel route while securing safety during driving assistance based on the target travel route, and the vehicle driving assistance system capable of assisting with driving of the vehicle on the basis of this target travel route.

This object is achieved by the features of the independent claims. Preferred developments are the subject of the dependent claims.

### [Means for solving the Problem]

In order to achieve the above purpose, the present invention provides a travel route generation system that has: a travel road information acquisition device that acquires travel road information on a travel road of a vehicle; an obstacle information acquisition device that acquires obstacle information on an obstacle on the travel road; and an arithmetic device configured to generate a target travel route, on which the vehicle travels, on the travel road on the basis of the travel road information and the obstacle information. The arithmetic device is configured to generate a guide line as a reference travel line for guiding the vehicle on the travel road on the basis of the travel road information, to generate at least one avoidance line as a travel line for the vehicle to avoid the obstacle on the basis of the obstacle information, to generate the target travel route on the basis of the guide line and the avoidance line, and to set a first calculation cycle for generating the guide line to be longer than a second calculation cycle for generating the avoidance line.

In the present invention that is configured as described above, the arithmetic device sets the first calculation cycle for generating the guide line on the basis of the travel road information to be longer than the second calculation cycle for generating the avoidance line on the basis of the obstacle information. More specifically, the arithmetic device generates the avoidance line by using the obstacle information, which possibly changes from time to time, (because the obstacle moves in the case where the obstacle is a vehicle, a pedestrian, or the like) in the relatively short second calculation cycle. In this way, the arithmetic device prevents a collision between the vehicle and the obstacle and thereby appropriately secures safety during driving assistance based on the target travel route. Meanwhile, the arithmetic device generates the guide line by using the travel road information, which is not basically changed unlike the obstacle information, in the relatively long first calculation cycle, and thereby appropriately reduces a calculation load for generating the target travel route. As it has been described so far, according to the present invention, it is possible to appropriately and simultaneously secure the safety during the driving assistance based on the target travel route and reduce the calculation load for generating the target travel route.

In the present invention, preferably, in the first calculation cycle, the arithmetic device is configured to generate the guide line in a period of a first specified time ahead from initiation of a calculation in the cycle, and, in the second calculation cycle, the arithmetic device is configured to generate the avoidance line in a period of a second specified time ahead, which is shorter than the first specified time, from initiation of a calculation in the cycle.

In the present invention that is configured as described above, the calculation load that is required to generate the avoidance line is larger than the calculation load that is required to generate the guide line. Thus, the arithmetic device reduces the generation period of the avoidance line to be shorter than the generation period of the guide line. In this way, it is possible to further reduce the calculation load for generating the target travel route.

Preferably, said period of a first specified time is between about 7 seconds and about 10 seconds, and/or said period of a second specified time is between about 6 seconds and about 7 seconds.

In the present invention, preferably, in the first calculation cycle, the arithmetic device is configured to generate the guide line for a section from a position of the vehicle at the initiation of the calculation in the cycle to a position ahead by a first specified distance, and, in the second calculation cycle, the arithmetic device is configured to generate the avoidance line for a section from a position of the vehicle at the initiation of the calculation in the cycle to a position ahead by a second specified distance that is shorter than the first specified distance.

In the present invention that is configured as described above, the calculation load that is required to generate the avoidance line is larger than the calculation load that is required to generate the guide line. Thus, the arithmetic device sets the section for generating the avoidance line to be shorter than the section for generating the guide line. In this way, it is possible to further reduce the calculation load for generating the target travel route.

In the present invention, preferably, the arithmetic device is configured to generate the target travel route by correcting a portion of the guide line, which corresponds to the avoidance line, by the avoidance line in the case where the avoidance line is generated.

According to the present invention that is configured as described above, it is possible to effectively secure the safety during the driving assistance based on the target travel route.

In another aspect, in the present invention, a vehicle driving assistance system has a controller that is configured to execute driving control of a vehicle such that the vehicle travels along a travel route generated by the above-described travel route generation system.

According to a further aspect, there is provided a method of generating a travel route for a vehicle, the method comprising the steps of:
acquiring travel road information about a travel road of the vehicle,
acquiring obstacle information about an obstacle on the travel road,
generating a guide line as a reference travel line for guiding the vehicle on the travel road on the basis of the travel road information,
generating at least one avoidance line as a travel line for the vehicle to avoid the obstacle on the basis of the obstacle information,
generating a target travel route on which the vehicle travels, on the basis of the guide line and the avoidance line, and
setting a first calculation cycle for generating the guide line to be longer than a second calculation cycle for generating the avoidance line.

Preferably, in the first calculation cycle, the guide line is generated in a period of a first specified time ahead from initiation of a calculation in said cycle, and, in the second calculation cycle, the avoidance line is generated in a period of a second specified time ahead, which is shorter than the first specified time, from initiation of a calculation in said cycle.

Further preferred, said period of a first specified time is between about 7 seconds and about 10 seconds, and/or said period of a second specified time is between about 6 seconds and about 7 seconds.

Preferably, in the first calculation cycle, the guide line is generated for a section from a position of the vehicle at the initiation of the calculation in said cycle to a position ahead by a first specified distance, and, in the second calculation cycle, the avoidance line is generated for a section from a position of the vehicle at the initiation of the calculation in said cycle to a position ahead by a second specified distance that is shorter than the first specified distance.

Further preferred, the target travel route is generated by correcting a portion of the guide line, which corresponds to the avoidance line, by the avoidance line in the case where said avoidance line is generated.

According to a still further aspect, there is provided a computer program product comprising computer-readable instructions, which when loaded and executed on a suitable system, can perform the steps of any one of the above-mentioned methods.

### [Advantage of the invention]

According to the travel route generation system of the present invention, it is possible to appropriately reduce the calculation load for generating the target travel route while securing the safety during the driving assistance based on the target travel route. In addition, according to the vehicle driving assistance system of the present invention, it is possible to appropriately assist with driving of the vehicle on the basis of such a target travel route.

### [Brief Description of the Drawings]

[Fig. 1] Fig. 1 is a block diagram illustrating a schematic configuration of a vehicle driving assistance system to which a travel route generation system according to an embodiment of the present invention is applied.
[Fig. 2] Fig. 2 is a flowchart related to generation of a target travel route and driving assistance according to the embodiment of the present invention.
[Fig. 3] Fig. 3 is an explanatory view of generation of a guide line according to the embodiment of the present invention.
[Fig. 4] Figs. 4(A) and 4(B) are explanatory views of generation of an avoidance line according to the embodiment of the present invention.
[Fig. 5] Fig. 5 is an explanatory view of generation of the target travel route corresponding to the guide line and the avoidance line according to the embodiment of the present invention.

### [Modes for Carrying Out the Invention]

A description will hereinafter be made on a travel route generation system and a vehicle driving assistance system according to an embodiment of the present invention with reference to the accompanying drawings.

### [System Configuration]

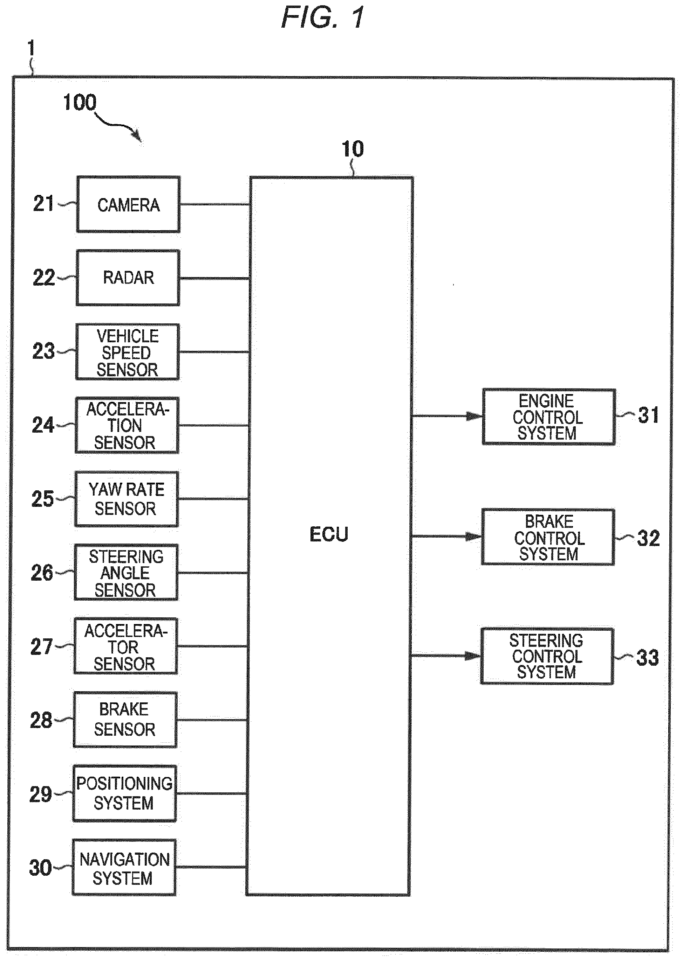

A description will firstly be made on a configuration of the vehicle driving assistance system, to which the travel route generation system according to the embodiment of the present invention is applied, with reference to Fig. 1. Fig. 1 is a block diagram illustrating a schematic configuration of the vehicle driving assistance system to which the travel route generation system according to the embodiment of the present invention is applied.

A vehicle driving assistance system 100 has a function as the travel route generation system that sets a target travel route, on which the vehicle 1 travels, on a travel road, and is configured to execute driving assistance control (driving assist control and automated driving control) to cause the vehicle 1 to travel along this target travel route. As illustrated in Fig. 1, the vehicle driving assistance system 100 has an electronic control unit (ECU) 10 as an arithmetic device and a controller, plural types of sensors, and plural control systems.

More specifically, the plural types of the sensors preferably include e.g. a camera 21, a radar 22, a vehicle speed sensor 23 for detecting behavior of the vehicle 1 and a driving operation by an occupant, an acceleration sensor 24, a yaw rate sensor 25, a steering angle sensor 26, an accelerator sensor 27, and a brake sensor 28. The plural types of the sensors may further include a positioning system 29 for detecting a position of the vehicle 1 and a navigation system 30. The plural control systems may include an engine control system 31, a brake control system 32, and a steering control system 33.

Moreover, other types of the sensors may be e.g. a peripheral sonar system for measuring a distance from and a position of a structure around the vehicle 1, a corner radar provided at each of four corners of the vehicle 1 to measure an approach of the peripheral structure, and an inner camera for capturing an image of the inside of a cabin of the vehicle 1.

The ECU 10 preferably executes various calculations on the basis of signals received from the plural types of the sensors, and sends control signals to the engine control system 31, the brake control system 32, and the steering control system 33 so as to appropriately actuate an engine system, a brake system, and a steering system, respectively. The ECU 10 is constructed of a computer that includes one or more processors (typically CPUs), memory (ROM, RAM, or the like) for storing various programs, an input/output device, and the like. The ECU 10 corresponds to an example of the "arithmetic device" and an example of the "controller" in the present invention.

The camera 21 captures an image around the vehicle 1, and outputs image data. Based on the image data received from the camera 21, the ECU 10 identifies objects (for example, a preceding vehicle (a forward vehicle), a following vehicle (a rear vehicle), a parked vehicle, a pedestrian, a travel road, road marking lines (a lane divider, a white line, and a yellow line), a traffic signal, a traffic sign, a stop line, an intersection, an obstacle, and the like). The ECU 10 may acquire information on the object from the outside through a traffic infrastructure, inter-vehicle communication, or the like. In this way, a type, a relative position, a moving direction, and the like of the object are identified.

The radar 22 measures a position and a speed of the object (particularly, the preceding vehicle, the following vehicle, the parked vehicle, the pedestrian, a dropped object on the travel road, or the like). For example, a millimeter-wave radar can be used as the radar 22. The radar 22 transmits a radio wave in an advancing direction of the vehicle 1, and receives a reflected wave that is generated when the object reflects the transmitted wave. Then, based on the transmitted wave and the received wave, the radar 22 measures a distance between the vehicle 1 and the object (for example, an inter-vehicular distance) and a relative speed of the object with respect to the vehicle 1. In this embodiment, instead of the radar 22, a laser radar, an ultrasonic sensor, or the like may be used to measure the distance from the object and the relative speed of the object. Alternatively, plural types of sensors may be used to constitute a position and a speed measuring device.

The camera 21 and the radar 22 correspond to an example of the "travel road information acquisition device" and an example of the "obstacle information acquisition device" in the present invention. For example, "travel road information" includes information on a shape of the travel road (a straight road, a curved road, or a curvature of the curved road), a travel road width, the number of lanes, a lane width, regulation information of the travel road designated on the traffic sign or the like (a speed limit or the like), the intersection, a crosswalk, and the like. "Obstacle information" includes information on presence or absence of the obstacle on the travel road of the vehicle 1 (for example, the object such as the preceding vehicle, the following vehicle, the parked vehicle, or the pedestrian that can possibly be the obstacle in travel of the vehicle 1), a moving direction of the obstacle, and a moving speed of the obstacle, and the like.

The vehicle speed sensor 23 detects an absolute speed of the vehicle 1. The acceleration sensor 24 detects acceleration of the vehicle 1. This acceleration includes acceleration in a longitudinal direction and acceleration in a lateral direction (that is, lateral acceleration). The acceleration includes not only a change rate of the speed in a speed increasing direction but also a change rate of the speed in a speed reducing direction (that is, deceleration).

The yaw rate sensor 25 detects a yaw rate of the vehicle 1. The steering angle sensor 26 detects a rotation angle (a steering angle) of a steering wheel of the vehicle 1. The ECU 10 executes a specified calculation on the basis of the absolute speed detected by the vehicle speed sensor 23 and the steering angle detected by the steering angle sensor 26, and can thereby acquire a yaw angle of the vehicle 1. The accelerator sensor 27 detects a depression amount of an accelerator pedal. The brake sensor 28 detects a depression amount of a brake pedal.

The positioning system 29 is a GPS system and/or a gyroscopic system, and detects the position of the vehicle 1 (current vehicle position information). The navigation system 30 stores map information therein, and can provide the map information to the ECU 10. Based on the map information and the current vehicle position information, the ECU 10 identifies a road, the intersection, the traffic signal, a building, and the like existing around (particularly, in the advancing direction of) the vehicle 1. The map information may be stored in the ECU 10. The navigation system 30 also corresponds to an example of the "travel road information acquisition device" in the present invention.

The engine control system 31 controls an engine of the vehicle 1. The engine control system 31 is a component capable of regulating engine output (drive power) and, for example, includes at least one ignition plug, at least one fuel injection valve, a throttle valve, a variable valve mechanism that changes opening/closing timing of intake/exhaust valves, and the like. When the vehicle 1 has to be accelerated or decelerated, the ECU 10 sends the control signal to the engine control system 31 so as to change the engine output.

The brake control system 32 controls the brake system of the vehicle 1. The brake control system 32 is a component capable of regulating a braking force of the brake system and, for example, includes a hydraulic pump, a valve unit, and the like. When the vehicle 1 has to be decelerated, the ECU 10 sends the control signal to the brake control system 32 so as to generate the braking force.

The steering control system 33 controls a steering device of the vehicle 1. The steering control system 33 is a component capable of regulating the steering angle of the vehicle 1 and, for example, includes an electric motor for an electric power steering system, and the like. When the advancing direction of the vehicle 1 has to be changed, the ECU 10 sends the control signal to the steering control system 33 so as to change a steering direction.

### [Generation of Target Travel Route]

Next, a description will be made on generation of the target travel route by the above-described ECU 10 in the embodiment of the present invention. First, a description will be made on an outline thereof.

In this embodiment, the ECU 10 generates a guide line on the basis of the travel road information, generates an avoidance line on the basis of the obstacle information, and generates the target travel route on the basis of the guide line and the avoidance line. The guide line is a reference travel line for guiding the vehicle 1 on the travel road. The avoidance line is a travel line for the vehicle 1 to avoid the obstacle. The target travel route is a route on which the vehicle 1 finally travels. In particular, in this embodiment, the ECU 10 sets a first calculation cycle for generating the guide line to be longer than a second calculation cycle for generating the avoidance line.

Here, since the obstacle on the travel road of the vehicle 1 possibly moves (for example, in the case where the obstacle is the vehicle or the pedestrian), the obstacle information that is used to generate the avoidance line is likely to be changed from time to time. Accordingly, the ECU 10 generates the avoidance line using such obstacle information in the relatively short second calculation cycle (for example, about 30 ms). In this way, it is possible to prevent a collision between the vehicle 1 and the obstacle, and the like and to appropriately secure safety during driving assistance that is based on the target travel route (to which the avoidance line is applied). Meanwhile, the travel road information that is used to generate the guide line is not basically changed. Accordingly, the ECU 10 generates the guide line in the relatively long first calculation cycle (for example, about 100 ms). In this way, it is possible to appropriately reduce a calculation load for generating the target travel route.

In an example of this embodiment, in the single first calculation cycle, the ECU 10 generates the guide line in a period of a first specified time (for example, about 7 to about 10 seconds) ahead from initiation of the calculation in the cycle. Meanwhile, in the single second calculation cycle, the ECU 10 generates the avoidance line in a period of a second specified time (for example, about 6 to about 7 seconds) ahead, which is shorter than the first specified time, from the initiation of the calculation in the cycle. That is, the calculation load that is required to generate the avoidance line is larger than the calculation load that is required to generate the guide line. Thus, the ECU 10 reduces the generation period of the avoidance line to be shorter than the generation period of the guide line. In this way, it is also possible to appropriately reduce the calculation load for generating the target travel route.

In another example of this embodiment, in the single first calculation cycle, the ECU 10 generates the guide line for a section from the position of the vehicle 1 at the initiation of the calculation in the cycle to a position ahead by a first specified distance (for example, about 100 m). Meanwhile, in the single second calculation cycle, the ECU 10 generates the avoidance line for a section from the position of the vehicle 1 at the initiation of the calculation in the cycle to a position ahead by a second specified distance (for example, about 60 m) that is shorter than the first specified distance. That is, the calculation load that is required to generate the avoidance line is larger than the calculation load that is required to generate the guide line. Thus, the ECU 10 reduces the section for which the avoidance line is generated to be shorter than the section for which the guide line is generated. In this way, it is also possible to appropriately reduce the calculation load for generating the target travel route.

The two examples described above may be combined and implemented. That is, in yet another example of this embodiment, the ECU 10 may reduce the generation period of the avoidance line to be shorter than the generation period of the guide line, and may reduce the section for which the avoidance line is generated to be shorter than the section for which the guide line is generated.

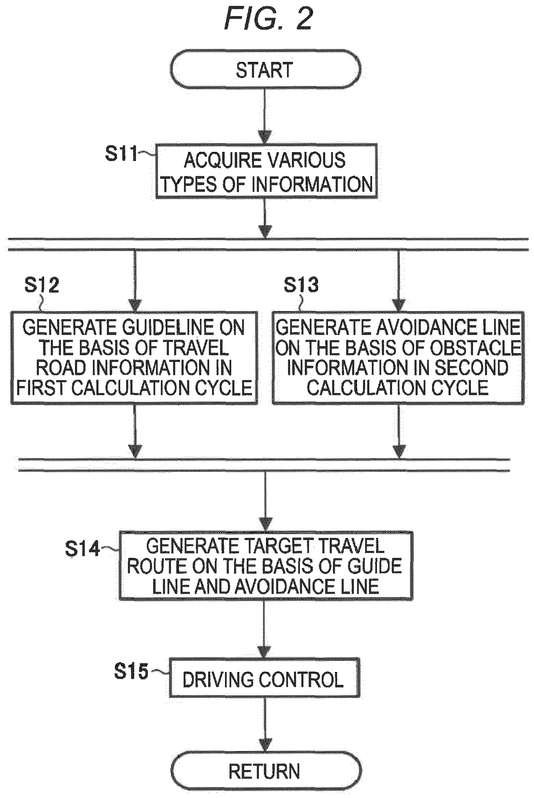

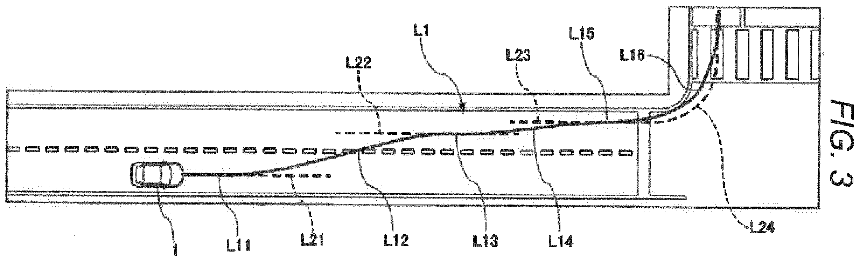

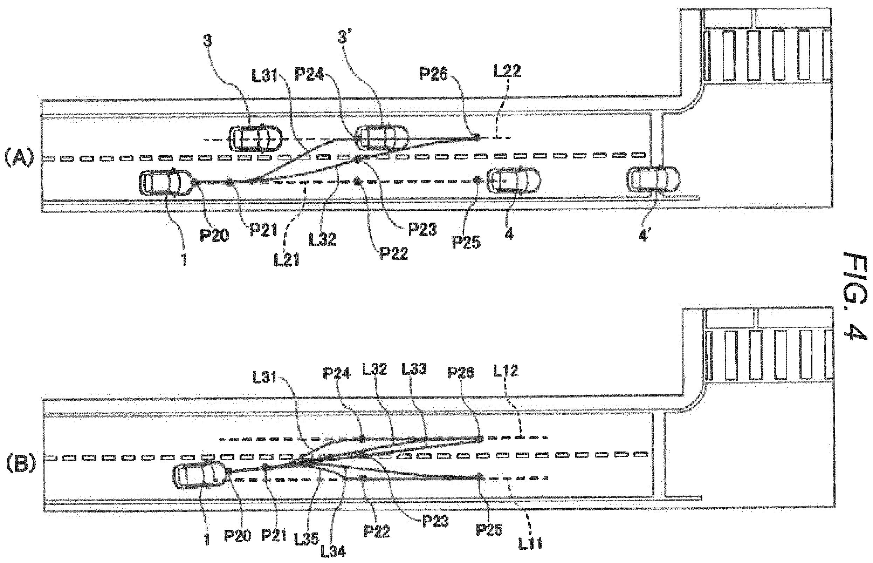

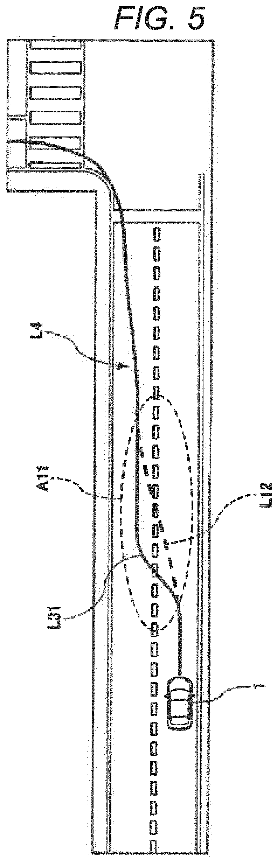

Next, a specific description will be made on the generation of the target travel route according to the embodiment of the present invention with reference to Fig. 2 to Fig. 5. Fig. 2 is a flowchart related to the generation of the target travel route and the driving assistance according to the embodiment of the present invention. Fig. 3 is an explanatory view of the generation of the guide line according to the embodiment of the present invention. Figs. 4(A) and 4(B) are explanatory views of the generation of the avoidance line according to the embodiment of the present invention. Fig. 5 is an explanatory view of the generation of the target travel route corresponding to the guide line and the avoidance line according to the embodiment of the present invention.

Processing related to the flowchart in Fig. 2 is repeatedly executed in specified cycles (for example, every about 0.05 to about 0.2 second) by the ECU 10. When the processing related to this flowchart is initiated, the ECU 10 first acquires various types of the information from the plural types of the sensors illustrated in Fig. 1 (particularly, the camera 21, the radar 22, the vehicle speed sensor 23, the navigation system 30, and the like) (step S11). In this case, the ECU 10 at least acquires the travel road information and the obstacle information described above.

Next, the ECU 10 generates the guide line on the basis of the travel road information in the first calculation cycle (step S12), and generates the avoidance line on the basis of the obstacle information in the second calculation cycle (< the first calculation cycle) (step S13). The ECU 10 simultaneously executes processing to generate the guide line and processing to generate the avoidance line. In an example, in the first calculation cycle, the ECU 10 generates the guide line in the period of the first specified time ahead from the initiation of the calculation in the cycle (that is, current time). Meanwhile, in the second calculation cycle, the ECU 10 generates the avoidance line in the period of the second specified time (< the first specified time) ahead from the initiation of the calculation in the cycle (that is, the current time). In another example, in the first calculation cycle, the ECU 10 generates the guide line for the section from the position of the vehicle 1 at the initiation of the calculation in the cycle (that is, the current position) to the position ahead by the first specified distance. Meanwhile, in the second calculation cycle, the ECU 10 generates the avoidance line for the section from the position of the vehicle 1 at the initiation of the calculation in the cycle (that is, the current position) to the position ahead by the second specified distance (< the first specified distance).

A specific description will be made on the generation of the guide line with reference to Fig. 3. Here, a situation where the vehicle 1 changes the lane and turns to the left at the intersection will be exemplified. Basically, the ECU 10 sets, as a guide line L1, an ideal travel line, on which the vehicle 1 should travel, on the travel road. The ECU 10 also sets the ideal vehicle speed (a method for changing the vehicle speed, and the like) that should be applied to the vehicle 1 on such a guide line L1. For example, the ECU 10 may set information on the vehicle speed to be included in the guide line L1.

In an example illustrated in Fig. 3, in order to cause the vehicle 1 to travel along a center line L21 of an own lane, the ECU 10 first sets a guide line L11 along the center line L21. Next, in order to cause the vehicle 1 to change the lane from the own lane to an adjacent lane, the ECU 10 sets a guide line L12 on the basis of the center line L21 of the own lane and a center line L22 of the adjacent lane as a lane change destination. Then, in order to cause the vehicle 1 to travel along the center line L22 of the adjacent lane, the ECU 10 sets a guide line L13 along the center line L22. Next, in order to cause the vehicle 1 to move to a left side in the adjacent lane near the intersection, the ECU 10 sets a guide line L14 on the basis of the center line L22 and a reference line L23 that is defined on a left side of the center line L22. In order to cause the vehicle 1 to travel at the speed limit on these guide lines L11 to L14, the ECU 10 sets the information on the vehicle speed corresponding to the speed limit for the guide lines L11 to L14. The information on the above-described center lines L21, L22, the above-described reference line L23 (the same applies to a reference line L24, which will be described below), the above-described speed limit, and the like is included in the travel road information.

Next, in order to cause the vehicle 1 to travel along the reference line L23 described above, the ECU 10 sets a guide line L15 along the reference line L23. In this case, in order to decelerate the vehicle 1 near the intersection, the ECU 10 sets information on the reduced vehicle speed for the guide line L15. For example, the ECU 10 sets the vehicle speed to be applied to the guide line L15 so as such that the deceleration is generated in consideration of ride quality. Next, the ECU 10 sets a guide line L16 to cause the vehicle 1 to turn to the left at the intersection. In this case, the ECU 10 calculates a relaxation curve (for example, a clothoid curve), for which the ride quality is considered, from the reference line L24 (an arc having a constant curvature that connects an end of the reference line L23 and an end of a center line of a lane after the vehicle 1 turns to the left) for causing the vehicle 1 to turn to the left at the intersection. Then, the ECU 10 sets the guide line L16 along this relaxation curve. The ECU 10 calculates all of such guide lines L11 to L16 in the first calculation cycle, and uses a travel line that is obtained by connecting these guide lines L11 to L16 as the guide line L1 to be applied.

Next, a specific description will be made on the generation of the avoidance line with reference to Fig. 4. Here, a case where a preceding vehicle 3 exists on the adjacent lane as the lane change destination and a preceding vehicle 4 exists on the own lane in a situation where the vehicle 1 changes the lane and turns to the left at the intersection is exemplified.

As illustrated in Fig. 4(A), the ECU 10 first predicts positions of the vehicle 1 and the preceding vehicles 3, 4 (for example, a position indicated by a reference numeral 3' corresponding to the preceding vehicle 3, a position indicated by a reference numeral 4' corresponding to the preceding vehicle 4, and the like) after a lapse of a specified time on the basis of the obstacle information and the like. Next, based on the thus-predicted positions and the like, the ECU 10 sets plural travel mediating points P20 to P26 that are used to define the avoidance line. The travel mediating point P20 corresponds to a current position of a front portion of the vehicle 1, the travel mediating point P21 corresponds to a current position of a rear portion of the preceding vehicle 3, the travel mediating points P22, P23, P24 each correspond to a predicted position of the rear portion of the preceding vehicle 3 after the lapse of the specified time, and the travel mediating points P25, P26 each correspond to a predicted position of the front portion of the vehicle 1 after the lapse of the specified time. The travel mediating points P20, P21, P22, P25 are substantially set on the center line L21 of the own lane, the travel mediating points P24, P26 are substantially set on the center line L22 of the adjacent lane, and the travel mediating point P23 is substantially set on a boundary between the own lane and the adjacent lane. In the example illustrated in Fig. 4(A), the preceding vehicle 4 on the own lane is not the obstacle that should be avoided. Thus, the travel mediating points are set without taking the preceding vehicle 4 into consideration.

Next, as illustrated in Fig. 4(B), the ECU 10 generates candidates for the avoidance line to be applied finally on the basis of the plural travel mediating points P20 to P26. For example, the ECU 10 generates avoidance lines L31 to L35. The avoidance line L31 is the candidate for the avoidance line which is obtained by connecting the travel mediating points P20, P21, P24, P26 and on which the vehicle 1 moves behind the preceding vehicle 3 as a result of the lane change, and the avoidance line L32 is the candidate for the avoidance line which is obtained by connecting the travel mediating points P20, P21, P23, P26 and on which the vehicle 1 moves ahead of the preceding vehicle 3 as the result of the lane change (these avoidance lines L31, L32 are also illustrated in Fig. 4(A)). Meanwhile, the avoidance lines L34, L35 are the candidates for the avoidance line on which the vehicle 1 does not change the lane.

After the guide lines and the avoidance lines are generated as described above, the ECU 10 generates the target travel route on which the vehicle 1 finally travels (step S14 in Fig. 2). For example, among the plural avoidance lines, the ECU 10 selects the avoidance line, an end point of which is the closest to the guide line, from the avoidance lines on each of which the vehicle 1 does not collide with the obstacle. In this case, the ECU 10 predicts the position and the speed of the obstacle in the future for each of the avoidance lines, and determines whether the vehicle 1 collides with the obstacle. Then, the ECU 10 corrects a portion of the guide line, which corresponds to the selected avoidance line, by the avoidance line, so as to generate the target travel route. Typically, the ECU 10 replaces the portion of the guide line, which corresponds to the selected avoidance line, with the avoidance line.

A description will herein be made on a target travel route L4, which is generated by the guide line L1 and the avoidance lines L31 to L35 illustrated in Fig. 3 and Fig. 4, with reference to Fig. 5. In this example, among the plural avoidance lines L31 to L35, the ECU 10 selects the avoidance line L31 as the avoidance line on which the vehicle 1 does not collide with the obstacle and an end point of which is the closest to the guide line L1. Then, the ECU 10 replaces a portion A11 of the guide line (a portion of the original guide line L12), which corresponds to the selected avoidance line L31, with the avoidance line L31, so as to generate the target travel route L4.

Next, the ECU 10 sends the control signal to at least one of the engine control system 31, the brake control system 32, and the steering control system 33 such that the vehicle 1 travels along the target travel route generated as described above, and executes at least one of engine control, braking control, and steering control as driving control (step S15 in Fig. 2).

### [Operation and Effects]

Next, a description will be made on an operation and effects according to the embodiment of the present invention.

In this embodiment, the ECU 10 sets the first calculation cycle for generating the guide line based on the travel road information to be longer than the second calculation cycle for generating the avoidance line based on the obstacle information. More specifically, the ECU 10 generates the avoidance line by using the obstacle information, which possibly changes from time to time, in the relatively short second calculation cycle. In this way, the ECU 10 prevents the collision between the vehicle 1 and the obstacle and thereby secures the safety during the driving assistance based on the target travel route. Meanwhile, the ECU 10 generates the guide line by using the travel road information, which is not basically changed unlike the obstacle information, in the relatively long first calculation cycle, and thereby reduces the calculation load for generating the target travel route. As it has been described so far, according to this embodiment, it is possible to appropriately reduce the calculation load for generating the target travel route while securing the safety during the driving assistance based on the target travel route.

In the one example of this embodiment, in the first calculation cycle, the ECU 10 generates the guide line in the period of the first specified time ahead from the initiation of the calculation in the cycle. Meanwhile, in the second calculation cycle, the ECU 10 generates the avoidance line in the period of the second specified time ahead, which is shorter than the first specified time, from the initiation of the calculation in the cycle. That is, the calculation load that is required to generate the avoidance line is larger than the calculation load that is required to generate the guide line. Thus, the ECU 10 reduces the generation period of the avoidance line to be shorter than the generation period of the guide line. In this way, it is possible to further reduce the calculation load for generating the target travel route.

In addition, in the other example of this embodiment, in the first calculation cycle, the ECU 10 generates the guide line for the section from the position of the vehicle 1 at the initiation of the calculation in the cycle to the position ahead by the first specified distance. Meanwhile, in the second calculation cycle, the ECU 10 generates the avoidance line for the section from the position of the vehicle 1 at the initiation of the calculation in the cycle to the position ahead by the second specified distance that is shorter than the first specified distance. That is, the calculation load that is required to generate the avoidance line is larger than the calculation load that is required to generate the guide line. Thus, the ECU 10 reduces the section for which the avoidance line is generated to be shorter than the section for which the guide line is generated. In this way, it is possible to further reduce the calculation load for generating the target travel route.

Furthermore, in this embodiment, in the case where the avoidance line is generated, the ECU 10 corrects (for example, replaces) the portion of the guide line, which corresponds to the avoidance line, by (with) the avoidance line, so as to generate the target travel route. In this way, it is possible to effectively secure the safety during the driving assistance based on the target travel route.

### [Modified Examples]

In the embodiment described above, the example in which the present invention is applied to the vehicle 1 having the engine as a drive source has been described (see Fig. 1). However, the present invention can also be applied to a vehicle having an electric motor as the drive source (an electric vehicle or a hybrid vehicle). In addition, in the above-described embodiment, the braking force is applied to the vehicle 1 by the brake system (the brake control system 32). However, in another example, the braking force may be applied to the vehicle by regeneration of a battery for supplying power to the electric motor.

### [Description of Reference Signs and Numerals]

- 1: Vehicle
- 10: ECU
- 21: Camera
- 22: Radar
- 30: Navigation system
- 31: Engine control system
- 32: Brake control system
- 33: Steering control system
- 100: Vehicle driving assistance system

## Claims

1. A travel route generation system comprising:
a travel road information acquisition device (21, 22, 30) that acquires travel road information on a travel road of a vehicle (1);
an obstacle information acquisition device (21, 22) that acquires obstacle information on an obstacle on the travel road; and
an arithmetic device (ECU 10) configured to generate a target travel route (L4), on which the vehicle (1) travels, on the travel road on the basis of the travel road information and the obstacle information, wherein
the arithmetic device (ECU 10) is configured to
generate a guide line (L1) as a reference travel line for guiding the vehicle (1) on the travel road on the basis of the travel road information,
generate at least one avoidance line (L31 to L35) as a travel line for the vehicle (1) to avoid the obstacle on the basis of the obstacle information,
generate the target travel route (L4) on the basis of the guide line (L1) and the avoidance line (L31 to L35), and
set a first calculation cycle for generating the guide line (L1) to be longer than a second calculation cycle for generating the avoidance line (L31 to L35).

2. The travel route generation system according to claim 1, wherein
in the first calculation cycle, the arithmetic device (ECU 10) is configured to generate the guide line (L1) in a period of a first specified time ahead from initiation of a calculation in said cycle, and, in the second calculation cycle, the arithmetic device (ECU 10) is configured to generate the avoidance line (L31 to L35) in a period of a second specified time ahead, which is shorter than the first specified time, from initiation of a calculation in said cycle.

3. The travel route generation system according to claim 2, wherein said period of a first specified time is between about 7 seconds and about 10 seconds, and/or said period of a second specified time is between about 6 seconds and about 7 seconds.

4. The travel route generation system according to any one of the preceding claims, wherein
in the first calculation cycle, the arithmetic device (ECU 10) is configured to generate the guide line (L1) for a section from a position of the vehicle (1) at the initiation of the calculation in said cycle to a position ahead by a first specified distance, and, in the second calculation cycle, the arithmetic device (ECU 10) is configured to generate the avoidance line (L31 to L35) for a section from a position of the vehicle (1) at the initiation of the calculation in said cycle to a position ahead by a second specified distance that is shorter than the first specified distance.

5. The travel route generation system according to any one of the preceding claims, wherein
the arithmetic device (ECU 10) is configured to generate the target travel route (L4) by correcting a portion of the guide line (L1), which corresponds to the avoidance line (L31 to L35), by the avoidance line (L31 to L35) in the case where said avoidance line (L31 to L35) is generated.

6. A vehicle driving assistance system comprising:
a controller (ECU 10) configured to execute driving control of a vehicle such that the vehicle travels along a target travel route (L4) generated by the travel route generation system according to any one of the preceding claims.

7. A method of generating a travel route for a vehicle (1), the method comprising the steps of:
acquiring travel road information about a travel road of the vehicle (1),
acquiring obstacle information about an obstacle on the travel road,
generating a guide line (L1) as a reference travel line for guiding the vehicle (1) on the travel road on the basis of the travel road information,
generating at least one avoidance line (L31 to L35) as a travel line for the vehicle (1) to avoid the obstacle on the basis of the obstacle information,
generating a target travel route (L4) on which the vehicle (1) travels, on the basis of the guide line (L1) and the avoidance line (L31 to L35), and
setting a first calculation cycle for generating the guide line (L1) to be longer than a second calculation cycle for generating the avoidance line (L31 to L35).

8. The method according to claim 7, wherein
in the first calculation cycle, the guide line (L1) is generated in a period of a first specified time ahead from initiation of a calculation in said cycle, and, in the second calculation cycle, the avoidance line (L31 to L35) is generated in a period of a second specified time ahead, which is shorter than the first specified time, from initiation of a calculation in said cycle.

9. The method according to claim 8, wherein said period of a first specified time is between about 7 seconds and about 10 seconds, and/or said period of a second specified time is between about 6 seconds and about 7 seconds.

10. The method according to any one of claims 7 to 9, wherein
in the first calculation cycle, the guide line (L1) is generated for a section from a position of the vehicle (1) at the initiation of the calculation in said cycle to a position ahead by a first specified distance, and, in the second calculation cycle, the avoidance line (L31 to L35) is generated for a section from a position of the vehicle (1) at the initiation of the calculation in said cycle to a position ahead by a second specified distance that is shorter than the first specified distance.

11. The method according to any one of claims 7 to 10, wherein
the target travel route (L4) is generated by correcting a portion of the guide line (L1), which corresponds to the avoidance line (L31 to L35), by the avoidance line (L31 to L35) in the case where said avoidance line (L31 to L35) is generated.

12. A computer program product comprising computer-readable instructions, which when loaded and executed on a suitable system, can perform the steps of any method of claims 7 to 11.
